# EUROPEAN PATENT APPLICATION

(11) **EP 2 664 989 A1**
(43) Date of publication of application: **20.11.2013**
(21) Application number: 12360037.1
(22) Date of filing: 14.05.2012
(51) Int. Cl.: G06F 9/48, G06F 9/52

(54) **Task scheduling**

(71) Applicant: Alcatel Lucent, 75007 Paris (FR)
(72) Inventor: Cucinotta, Tommaso, 15 Dublin (IE)
(74) Representative: Script IP Limited

(57) **Abstract**

Task scheduling and, in particular, to a method of scheduling tasks for execution by a data processing apparatus, a computer program product and a scheduler are disclosed. The method of scheduling tasks for execution by a data processing apparatus comprises: (i) determining whether an initial task having an associated urgency level has suspended due to a condition required for continued execution of the initial task not being met; and (ii) if so, causing at least one helper task identified as being executable to contribute to the condition to be met to be allocated the associated urgency level. In this way, when a task suspends and another task is able to contribute to removing the reason why that task suspended, then that task may be allocated to the urgency of the task which suspended in order to help it execute as quickly as possible and likely more quickly than it would have otherwise have since any tasks having a lower urgency than the suspended task may have prevented that help the task from otherwise executing. This helps to should ensure that the suspended task can resume execution as quickly as possible, having regard to its own urgency.

## Description

### FIELD OF THE INVENTION

The present invention relates to task scheduling and, in particular, to a method of scheduling tasks for execution by a data processing apparatus, a computer program product and a scheduler.

### BACKGROUND

Task scheduling in data processing apparatus is known. A task is typically considered to be a single thread of execution in a computing system, be it either a thread in a multi-threaded application, or a process. Such tasks may be scheduled for execution based on their urgency. Urgency may typically be considered to refer to the right of execution of a task compared to other tasks from the processor scheduler's viewpoint. This includes both the priority of tasks whenever they are scheduled according to a priority-based discipline or a deadline whenever they are scheduled according to a deadline-based discipline. However, it will be appreciated that other scheduling disciplines may be utilized.

When scheduling tasks, typically the scheduler the enables those tasks with a higher urgency to execute in preference to those tasks with a lower urgency. This typically leads to higher urgency tasks executing more quickly than lower urgency tasks.

Although such a scheduling approach helps to ensure the execution of the most appropriate tasks, unexpected consequences can occur.

Accordingly, it is desired to provide an improved technique for scheduling tasks.

### SUMMARY

According to a first aspect, there is provided a method of scheduling tasks for execution by a data processing apparatus, the method comprising: (i) determining whether an initial task having an associated urgency level has suspended due to a condition required for continued execution of the initial task not being met; and (ii) if so, causing at least one helper task identified as being executable to contribute to the condition to be met to be allocated the associated urgency level.

The first aspect recognizes that a problem with existing schedulers is that the execution of a higher urgency task may be delayed due to the avoidable interference of lower urgency tasks. Such delay can occur due to so-called priority inversion which happens every time a task execution is delayed due to the avoidable interference of lower priority tasks, and more generally of lower urgency tasks.

For example, priority-inversion happens whenever a higher-urgency task tries to acquire a lock on a mutual-exclusion semaphore "mutex" already locked by a lower-urgency task. The lower-urgency lock owner task needs to release the lock before the more urgent task can proceed and this delay is unavoidable. However, priority inversion happens whenever a third task with a middle urgency between these two "pre-empts" the lower-urgency task that is running while holding the lock, adding unnecessary delay to the release of the lock, thus to the execution of the higher-urgency task.

For example, consider a sequence in which three tasks A, B and C are scheduled on the same processor by using a priority-based scheduler. Task C is executing while no other higher-priority tasks are ready to run. Then, task C locks the mutex but, before being able to release it, it is pre-empted by the higher-priority task A that just woke up. Task A executes for a while, then it tries to lock the same mutex already locked by task C, thus it suspends allowing task C to continue execution. Unfortunately, task C cannot execute for much time, because task B wakes up at this point, pre-empting task C as due to its higher-priority. However, despite task B having a higher-priority than task C, task C holds a lock for which the highest-priority task A is waiting, thus task B should not be allowed to pre-empt task C in such a case. Therefore, the time for which task B keeps executing, delaying the release of the lock by task C, constitutes an avoidable additional delay for the task A.

A mutex may be used for synchronization of tasks in conjunction with condition variables, a mechanism that allows a task to suspend its execution waiting for a condition to be satisfied on certain variables. A typical example is one of a reader task from a queue of messages waiting for someone to write into the queue when it is empty. When the reader tries to read an element from the queue but finds it empty, it suspends itself until the number of elements in the queue becomes greater than zero (as a consequence of a writer task pushing one element into the queue). In such a case, the reader typically blocks on a condition variable with an operation that atomically suspends the task and releases the mutex (e.g., by using a pthread_cond_wait() call in a pthreads library implementation). The writer task, on the other hand, after insertion of an element in the queue, notifies possible readers through a notify operation (e.g., a pthread_cond_notify() call in the pthreads library implementation).

The first aspect recognises that a kind of priority inversion is also possible in these cases. In particular, a task that needs to wait for a condition to become true, may unnecessarily be delayed by lower-urgency tasks. Indeed, if the task(s) responsible for letting the mentioned condition become true run at a lower-urgency in the system, and a third unrelated task with a middle urgency level wakes up, the third task may pre-empt the execution of those lower-urgency tasks, thus delaying the achievement of the condition for which the higher-urgency task is waiting. In this case, traditional mechanisms of priority inheritance cannot help, because the higher-urgency task waiting for the condition to become true drops the mutex lock before suspending, and the lower-urgency task(s) that need to proceed in their computations so as to perform the notify operation do not hold any mutex lock while they are computing.

For example, consider that task A communicates with a lower-urgency task C via a message queue Q. In this scenario, task A tries to read atomically from the queue Q, thus it locks the queue Q mutex, but releases it immediately after detecting that the queue Q is empty, blocking on a condition variable. Task C can then execute, but, before it finishes its computations for writing into the message queue Q, it gets pre-empted by a third unrelated task B with a urgency level higher than C but lower than A. The time for which task B is executing constitutes an unnecessary delay for the execution of the higher-urgency task A, which is waiting for task C to write something into the shared queue Q.

This problem is relevant for the broad class of time-sensitive applications that need to be programmed by means of multiple concurrent threads of execution interacting with each other. This includes both traditional real-time embedded applications and also interactive time-sensitive and quality of service (QoS)-aware cloud-computing applications, where precise levels of service need to be guaranteed by the run-time environment in terms of responsiveness of the hosted applications.

Accordingly, a method of scheduling tasks is provided. The method may comprise determining whether an initial task having an associated urgency level has suspended due to a condition required for continued execution of the task not being met. The method may also comprise that if it is determined that an initial task having an associated urgency level has suspended due to a condition required for continued execution of the task not being met been causing at least one helper task identified as being executable to contribute to the conditions to be met is allocated the associated urgency level. In this way, when a task suspends and another task is able to contribute to removing the reason why that task suspended, then that task may be allocated to the urgency of the task which suspended in order to help it execute as quickly as possible and likely more quickly than it would have otherwise have since any tasks having a lower urgency than the suspended task may have prevented that helper task from otherwise executing. This helps to ensure that the suspended task can resume execution as quickly as possible, having regard to its own urgency.

It will be appreciated that the urgency level may be considered to be the right of execution of a task from the perspective of the scheduler being used for temporal scheduling of the processors or cores available on the platform to the running tasks. The scheduler may be a priority-based one, thus the urgency level may correspond to the priority, or it can be a deadline-based on, thus the urgency may correspond to the deadline, or may be any other kind of urgency-based approach. The first aspect may be utilized equally well using any such urgency-based approach.

In one embodiment, the step (ii) comprises causing the at least one helper task identified as being executable to contribute to the condition to be met to be allocated the associated urgency level when the helper task is identified as being less urgent than the initial task. Accordingly, the urgency level of the task that is waiting is allocated to or inherited by the helper tasks only if that urgency level is higher than the urgency level of the helper task itself. This boosting of the urgency level helps to ensure that the condition is satisfied as quickly as possible.

In one embodiment, the step (ii) comprises causing each helper task identified as being executable to contribute to the condition to be met to be allocated the associated urgency level when each helper task is identified as being less urgent than the initial task. Accordingly all of the helper tasks identified may be allocated the urgency level of the suspended task when their own urgency levels are lower than that of the suspended or initial task.

In one embodiment, the step (ii) comprises causing each helper task identified as being executable to contribute to the condition to be met to be allocated the associated urgency level when each helper task is identified as being less urgent than the initial task and the helper task is ready to be executed. Accordingly, the helper tasks may be allocated the urgency level when those helper tasks are ready for execution.

In one embodiment, the condition comprises at least one of a conditional variable being true and a semaphore being locked. Accordingly, the condition to become true may be determined by a condition variable used in conjunction with a semaphore being locked. It will be appreciated that such an approach provides for urgency inheritance under a range of different conditions.

In one embodiment, the conditional variable represents a state of at least one of message queue and a buffer. Examples of such conditional variables may be that of having at least one element in a queue or a dual condition of, for example, having at least one free slot in a fixed-size queue.

In one embodiment, it is determined that the initial task having an associated urgency level has suspended due to the condition required for continued execution of the initial task not being met as a consequence of, or in response to, a wait call to the condition variable. Accordingly, it may be determined that suspension has occurred as a consequence of a wait call to the condition variable.

In one embodiment, the semaphore is associated with ensuring mutually exclusive execution of critical code sections or to a region of shared storage. Accordingly, such a semaphore may be used to guarantee mutual exclusive execution of critical code sections. One example may be that the critical code sections manipulate a common data structure in shared memory. Accordingly, the semaphore may be associated with a region of shared storage.

In one embodiment, it is determined that the initial task having an associated urgency level has suspended due to the condition required for continued execution of the initial task not being met in response to an indication being received that the initial task has suspended due to the semaphore being locked.

In one embodiment, the helper task is identified by interrogating a list of helper tasks associated with the condition to be met. Accordingly, a list of helper tasks may be maintained as being associated with particular conditions.

In one embodiment, the method comprises the step of receiving an indication of changes to the list of helper tasks. Accordingly, the list of helper tasks may vary dynamically.

In one embodiment, the method comprises the steps of iteratively repeating the steps (i) and (ii) with the helper task as the initial task. Accordingly, any helper task may itself be the subject of urgency inheritance when that helper task also suspends on the same or a different conditions not being met. This enables the urgency inheritance to be propagated through a chain of tree of such tasks.

In one embodiment, when iteratively repeating the steps (i) and (ii) with the helper task as the initial task generates a tree of related initial and helper tasks and tasks within the tree are allocated a highest urgency level of any task within the tree.

It will be appreciated that one helper may assist in resolving multiple different conditions. For example, a helper task may unblock two or more conditions on which different tasks are waiting. In such a case, the helper will be allocated the highest urgency among its and all of the other tasks that are waiting for it through the respective condition variables plus the ones transitively waiting on them.

In one embodiment, the method comprises the step of removing the allocated urgency level when the helper task ceases to contribute to the condition to be met. Accordingly, the urgency level may then be revoked once the task has completed execution and/or the condition which caused the task to be allocated another urgency has been met. For example, any one of multiple helper tasks may contribute to a condition becoming true and each of those may be allocated the urgency level. Should any one of those helper tasks cause the conditions be met, then all of those helper tasks may have that urgency level revoked and restored to its original level.

In one embodiment, the urgency level comprises at least one of a priority associated with the initial task and an indication of a time period within which the initial task should execute. Hence the urgency level may comprise a deadline within which the initial task should execute.

In one embodiment, the method comprises executing tasks in accordance with a scheduling policy that determines their urgency to be executed.

In one embodiment, tasks are executed based on one of their priority and their execution deadline.

According to a second aspect, there is provided a computer program product operable, when executed on a computer, to perform the method steps of the first aspect.

According to a third aspect, there is provided a scheduler operable to schedule tasks for execution by a data processing apparatus, the scheduler comprising: determining logic operable to determine whether an initial task having an associated urgency level has suspended due to a condition required for continued execution of the initial task not being met; and allocation logic responsive to the determining logic to cause at least one helper task identified as being executable to contribute to the condition to be met to be allocated the associated urgency level.

In one embodiment, the allocation logic causes the at least one helper task identified as being executable to contribute to the condition to be met to be allocated the associated urgency level when the helper task is identified as being less urgent than the initial task.

In one embodiment, the allocation logic causes each helper task identified as being executable to contribute to the condition to be met to be allocated the associated urgency level when each helper task is identified as being less urgent than the initial task.

In one embodiment, the allocation logic causes each helper task identified as being executable to contribute to the condition to be met to be allocated the associated urgency level when each helper task is identified as being less urgent than the initial task and the helper task is ready to be executed.

In one embodiment, the condition comprises at least one of a conditional variable being true and a semaphore being locked.

In one embodiment, the conditional variable represents a state of at least one of message queue and a buffer.

In one embodiment, the determination logic determines that the initial task having an associated urgency level has suspended due to the condition required for continued execution of the initial task not being met as a consequence of, or in response to, a wait call to the condition variable.

In one embodiment, the semaphore is associated with ensuring mutually exclusive execution of critical code sections or a region of shared storage.

In one embodiment, the determination logic determines that the initial task having an associated urgency level has suspended due to the condition required for continued execution of the initial task not being met in response to an indication being received that the initial task has suspended due to the semaphore being locked.

In one embodiment, the helper task is identified by interrogating a list of helper tasks associated with the condition to be met.

In one embodiment, the scheduler comprises reception logic operable to receive an indication of changes to the list of helper tasks.

In one embodiment, the scheduler is operable to iteratively designate the helper task as the initial task.

In one embodiment, the scheduler comprises generation logic operable when iteratively designating the helper task as the initial task to generate a tree of related initial and helper tasks and tasks within the tree are allocated a highest urgency level of any task within the tree.

In one embodiment, the allocation logic is operable to remove the allocated urgency level when the helper task ceases to contribute to the condition to be met.

In one embodiment, the urgency level comprises at least one of a priority associated with the initial task and an indication of a time period within which the initial task should execute.

In one embodiment, the scheduler is operable to cause tasks to be executed in accordance with a scheduling policy that determines their urgency to be executed.

In one embodiment, the scheduler is operable to cause tasks to be executed based on one of their priority and their execution deadline.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 a direct acyclic graph of suspended tasks;
Figure 2 illustrates a data processing apparatus according to one embodiment;
Figure 3 illustrates the main processing tasks executed by a scheduler when performing task suspension and inheritance according to one embodiment; and
Figure 4 illustrates an arrangement in which urgency inheritance propagates transitively.

### DESCRIPTION OF THE EMBODIMENTS

### Overview

Before discussing embodiments in any more detail, first an overview will be provided. As mentioned above, situations can arise during the execution of tasks by a data processing apparatus on one or more processor cores that a task may suspend or wait for a condition to become true for longer than is absolutely necessary. In particular, tasks which may assist in causing the condition to become true may be interrupted or delayed by another task which does not contribute to achievement of the condition. If the task which interrupted the condition being met has a lower urgency than the task which is suspended, then this means that a lower urgency task has prevented a higher urgency task from executing.

Accordingly, embodiments provide a technique which allows a higher urgency task waiting for a condition to become true to temporarily donate its urgency to one or more lower urgency tasks which contribute to the achievement of the condition and so speed up the verification of that condition. These lower urgency tasks are termed "helper" tasks and are identified to the run-time environment (such as, for example, the operating system) as being able to contribute to the achievement of the condition. This may be selectively enabled on a case-by-case basis (i.e., on a per condition basis, such as a per condition variable and/or per semaphore basis, as will be explained in more detail below), depending on the application and system requirements.

Using this information, the run-time environment is able to temporarily donate the urgency (for example, the right of execution with respect to the scheduler) of a higher urgency task waiting for a condition to become true to one or more lower urgency tasks which are able to speed up the verification of that condition. This allows the lower urgency tasks to temporarily inherit the right of execution of higher urgency tasks whenever a higher urgency task is suspended, waiting for some output produced by lower urgency tasks. This prevents those lower urgency helper tasks from being pre-empted by other tasks which may otherwise have a higher urgency than the helper tasks, but a lower urgency than the suspended tasks, which would otherwise effectively unnecessarily delay the execution of the higher urgency tasks due to execution of the pre-empting lower urgency task. As soon as the condition becomes true or the helper task completes its execution, the inheritance dynamically inherited by that helper task may be revoked, restoring the helper task to its original urgency.

The urgency inheritance or allocation may occur transitively when required. For example, if task X blocks on a condition variable, donating temporarily its urgency to task Y (i.e., task X suspends execution due to a condition not being met), information available to the run-time environment may indicate that task Y is designated as a helper task which may contribute to the fulfilment of the condition which task X is waiting on becoming true, and so the urgency associated with task X is allocated to task Y.

Task Y, in turn, blocks on another condition variable, donating temporarily its urgency to task Z (i.e., task Y suspends execution due to a condition not being met), information available to the run-time environment may indicate that task Z is designated as a helper task which may contribute to the fulfilment of the condition which task Y is waiting on becoming true, and so the urgency associated with task Y is allocated to task Z.

In these circumstances, each helper task should inherit the highest urgency of the preceding tasks (i.e., each of tasks X, Y and Z will inherit or be allocated the highest urgency associated with those tasks).

Also, urgency inheritance can be integrated with traditional priority inheritance (or deadline inheritance) which is typically supported by many operating systems, letting the urgency to propagate transitively between tasks due to, for example, an attempt to lock a locked mutex or due to a suspension on a condition variable.

### Task Suspension and Inheritance

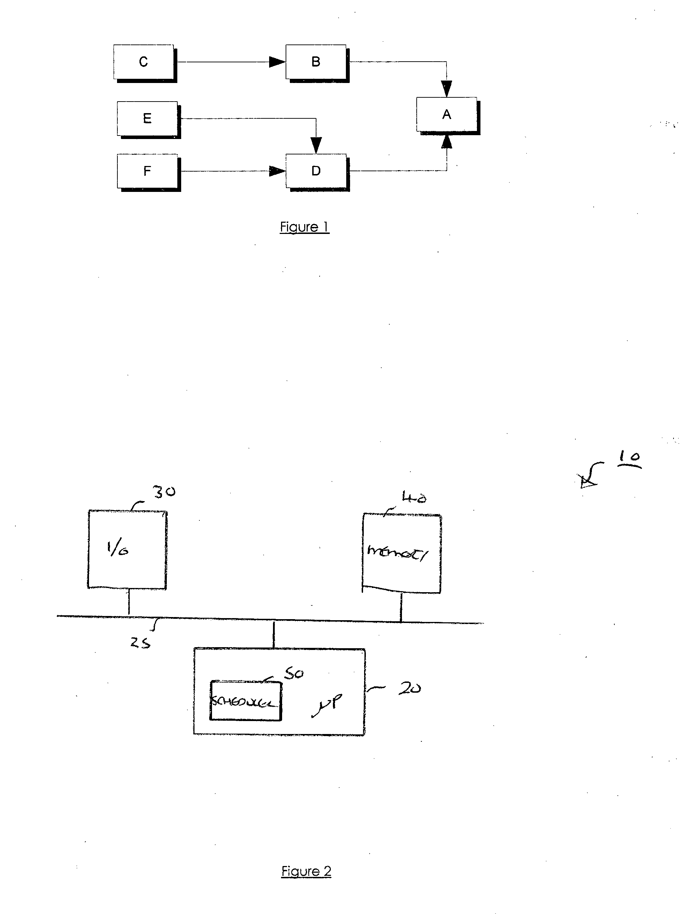

Consider the arrangement shown in Figure 1 which shows a direct acyclic graph of suspended tasks. Each arrow from one task to another indicates that the former task is blocked on the latter (i.e., the (former) task from which the arrow originates is suspended pending execution of the (latter) task to which the arrow points or terminates). Such suspension may occur, for example, due to a lock already acquired by the latter task or due to a suspension on a condition variable for which the latter task is a helper. Hence, a blocking chain of tasks is created, which may evolve into a blocking tree such as that illustrated.

In this example, task C is suspended due to it trying to acquire a lock (enhanced with urgency inheritance such as priority or deadline inheritance) on a semaphore already held by task B, or because it needs to wait for a condition variable (enhanced with urgency inheritance such as priority or deadline inheritance), where task B is registered among the helper tasks listed as being associated with that condition variable.

In this example, task B is also suspended on task A, since task B is either trying to acquire a lock on a semaphore already held by A, or is waiting on either the same or a different condition variable where task A is registered among the helper tasks. A similar situation occurs for each of tasks E, F and D.

Accordingly, all the tasks in such a blocking chain are suspended, with the exception of the last one (which is eligible to run). This last task in the chain may inherit the urgency of any of the tasks in the blocking chain terminating on it (i.e., any task in the direct acyclic graph of blocking chains that terminate on it). For example, in the example shown in Figure 1, task A may inherit the urgency of any or all of the tasks shown, if all of these suspensions have occurred through mutex semaphores (combined with urgency inheritance) or condition variables (combined with urgency inheritance).

Also, whenever a task is associated with a maximum time for which or within which it may execute within certain time intervals specified by the scheduler, as in reservation-based scheduling, the inheritance may occur in such a way that the helper task executing as a result of its urgency having been boosted will account its execution towards the execution time constraints of the task from which the urgency was inherited. For example, if task F is associated with a maximum time for which it may execute within certain time intervals, then this maximum time may also be inherited by task A.

It will be appreciated that this technique may be utilised by single processor as well as multi-processor and multi-core scheduling systems.

Figure 2 illustrates a data processing apparatus, generally 10, according to one embodiment. The data processing apparatus 10 comprises one or more processors or processor cores 20, coupled to a bus 25 also coupled to which is input-output logic 30 and memory 40. Within the core 20 a scheduler 50 schedules tasks for execution.

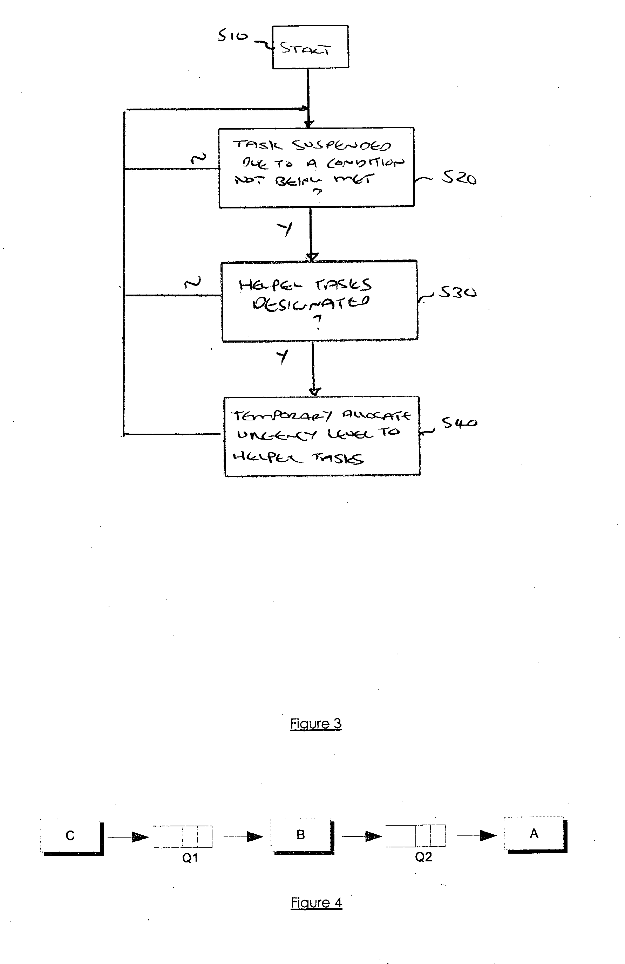

Figure 3 illustrates the main processing tasks executed by the scheduler 50 when performing task suspension and inheritance according to one embodiment.

At step S20, a determination is made of whether a task is suspended due to a condition not being met. If a task has suspended due to a condition not being met, then processing proceeds to step S30.

At step S30, a determination is made of whether helper tasks associated with the condition not being met have been designated. If helper tasks have been designated, then processing proceeds to step S40.

At step S40, the helper tasks are temporarily allocated the urgency of the suspended task, and may be allocated the urgency of all suspended tasks in the blocking chain. Processing then returns to step S20.

If, at step S30, no helper tasks are designated for condition, then processing returns to step S20.

If at step S20 it is determined that a task has no longer suspended due to a condition not being met, then processing returns to step S10.

### Library Call Example

In one embodiment, task urgency inheritance is available to applications by a specialised library call that is used by a task to declare itself as one of the potential helper tasks towards the verification of the condition associated with a condition variable. For example, for a pthreads library implementation this can be achieved as a C library call with the following signature:
int pthread_cond_helper(pthread_cond_t *cond, pthread_t *helper);
which adds the "helper" thread to the pool of threads which is empty after a pthread_condjnit() call that can potentially inherit the urgency of any thread waiting on the condition variable "cond" by means of a pthread_cond_wait() or pthread_cond_timedwait() call.

In this implementation, the condition variable may be associated with a list of helper threads and a kernel-level modification needs to ensure that the most urgent or highest urgency among all the waiting tasks blocked on the condition variable is dynamically inherited by the registered helper thread or threads, whenever the urgency is higher than their own urgency.

This inheritance is transitively propagated across both condition variables and traditional mutex operations supporting priority inheritance.

Whenever one of the helper threads calls the pthread_cond_notify() or pthread_cond_broadcast(), the corresponding threads which have been woken up out of suspension will then revoke the donation of their urgency to the helper thread or threads. Also, it is possible to have a similar function for removing a helper thread from the pool of helpers associated with a condition variable when the helpers for a particular condition variable are known to vary dynamically.

This approach can be utilised in an environment where a message queue in shared memory is protected by a mutex for guaranteeing atomic operations on the queue and a condition variable is used to wait for the queue to become non-empty. If the queue has a predetermined maximum size, then another condition variable may be used similarly to wait for the queue to become non-full. In this environment, whenever initialising the condition variable, a writer task will declare itself as a writer associating its task ID with the condition variable (i.e., declaring explicitly that its execution will lead to the verification of the condition associated with that condition variable (for example, a non-empty queue)). This is achieved with a call to the pthread_cond_helper() function after the condition variable initialisation. Therefore, whenever a reader task suspends its execution via a pthread_cond_wait() call on the condition variable, the associated writer or writers, if there are any ready for execution, will dynamically inherit the urgency of the suspended reader if this urgency is higher than their own. This will inhibit third (unrelated and middle-urgency) tasks pre-empting the low-urgency writer or writers, thereby ensuring that the fulfilment of the condition variable occurs as quickly as possible. In this case, the writer tasks will be able to execute with the same urgency as the reader task, thereby enabling the reader task to continue execution as quickly as possible having regard to its own urgency.

### Transitive Inheritance

Figure 4 illustrates an arrangement in which urgency inheritance propagates transitively. In this example, there is a pipeline of multiple tasks using message queues. Task A receives data from task B through message queue Q2 and task B receives data from task C through another message queue Q1.

When task A attempts a read from message queue Q2 but suspends itself because it finds message queue Q2 to be empty, the urgency of task A is donated to task B.

However, if task B also suspends execution because it attempts to read from message queue Q1 but finds that queue empty, then the urgency not only of B but also of A may be donated to task C.

Accordingly, task C will then execute with the highest urgency, either priority-based or deadline-based, that exists among tasks A, B and C.

Accordingly, embodiments provide an approach which improves the responsiveness of real-time applications and generally time-sensitive workloads when multiple threads of execution synchronise on each other by means of mutual exclusion semaphores coupled with condition variables. This is beneficial not only in traditional real-time embedded systems, but also in cloud computing scenarios, whenever time-sensitive software components risk undergoing unnecessary delays due to the problem of priority or deadline inversion.

Although existing solutions address some aspects of priority or deadline inversion, these are due to the attempt to lock mutual exclusion semaphores and they are not useful in scenarios where condition variables are used where, when a task that waits for a condition to become true suspends itself, it releases the mutual exclusion semaphore protecting the shared resource.

The embodiments mentioned herein will typically improve the responsiveness of real-time software components. For example, it is very common to see real-time applications modelled as directed acyclic graphs of computations which are triggered periodically or as a result of external events. Each node in the directed acyclic graph can start its computations once its inputs are available, which in turn are produced as an output of computations of other nodes. For example, in the domain of real-time and embedded systems, these kind of applications are commonly modelled visually using tools such as the Mathworks Simulink.

Embodiments are particularly useful in the context in which producers of data share common data structures in shared memory (serialising the operations on it by means of semaphores and synchronising among each other by means of condition variables), but at the same time they possess different urgencies or criticalities. This situation is very common in real-time systems. For example, in real-time systems can often find coexistence of both the main real-time code, characterised by stringent timing constraints, and other side software components that are needed for monitoring or configuration purposes. It often happens that some information flow is needed between these two (for example, the monitoring code needs to retrieve information about the status of the real-time code and the real-time code needs to reconfigure itself according to the configuration provided by the reconfiguration code).

As mentioned above, embodiments which are implemented in an operating system utilise a new interface in order to be useable by applications. An advantage of embodiments is that it allows application developers to keep designing code using traditional synchronisation primitives (i.e., mutual exclusion semaphores and condition variables), but they can improve the responsiveness of their applications with very little additional effort to designate which are the helper tasks for the condition variables they use.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of scheduling tasks for execution by a data processing apparatus, said method comprising:
(i) determining whether an initial task having an associated urgency level has suspended due to a condition required for continued execution of said initial task not being met; and
(ii) if so, causing at least one helper task identified as being executable to contribute to said condition to be met to be allocated said associated urgency level.

2. The method of claim 1, wherein said step (ii) comprises causing said at least one helper task identified as being executable to contribute to said condition to be met to be allocated said associated urgency level when said helper task is identified as being less urgent than said initial task.

3. The method of claim 1 or 2, wherein said step (ii) comprises causing each helper task identified as being executable to contribute to said condition to be met to be allocated said associated urgency level when each helper task is identified as being less urgent than said initial task.

4. The method of any preceding claim, wherein said condition comprises at least one of a conditional variable being true and a semaphore being locked.

5. The method of claim 4, wherein said conditional variable represents a state of at least one of message queue and a buffer.

6. The method of claim 4 or 5, wherein it is determined that said initial task having an associated urgency level has suspended due to said condition required for continued execution of said initial task not being met as a consequence of a wait call to said condition variable.

7. The method of any one of claims 4 to 6, wherein said semaphore is associated with ensuring mutually exclusive execution of critical code sections.

8. The method of any one of claims 4 to 7, wherein it is determined that said initial task having an associated urgency level has suspended due to said condition required for continued execution of said initial task not being met in response to an indication being received that said initial task has suspended due to said semaphore being locked.

9. The method of any preceding claim, wherein said helper task is identified by interrogating a list of helper tasks associated with said condition to be met.

10. The method of any preceding claim, comprising the steps of iteratively repeating said steps (i) and (ii) with said helper task as said initial task.

11. The method of claim 10, wherein when iteratively repeating said steps (i) and (ii) with said helper task as said initial task generates a tree of related initial and helper tasks and tasks within said tree are allocated a highest urgency level of any task within said tree.

12. The method of any preceding claim, comprising the step of removing said allocated urgency level when said helper task ceases to contribute to said condition to be met.

13. The method of any preceding claim, wherein said urgency level comprises at least one of a priority associated with said initial task and an indication of a time period within which said initial task should execute.

14. A computer program product operable, when executed on a computer, to perform the method steps of any one of claims 1 to 13.

15. A scheduler operable to schedule tasks for execution by a data processing apparatus, said scheduler comprising:
determining logic operable to determine whether an initial task having an associated urgency level has suspended due to a condition required for continued execution of said initial task not being met; and
allocation logic responsive to the determining logic to cause at least one helper task identified as being executable to contribute to said condition to be met to be allocated said associated urgency level.
wherein said allocation logic causes said at least one helper task identified as being executable to contribute to said condition to be met to be allocated said associated urgency level when said helper task is identified as being less urgent than said initial task.
